# EUROPEAN PATENT SPECIFICATION

(11) **EP 3 083 220 B1**
(45) Date of publication and mention of the grant of the patent: **03.01.2018**
(21) Application number: 14787133.9
(22) Date of filing: 15.10.2014
(51) Int. Cl.: B29D 30/06

(54) **MOULDING ELEMENT COMPRISING CUTTING MEANS FOR MOULDING AND VULCANIZING A TYRE TREAD**
FORMTEIL MIT SCHNEIDEMITTELN ZUM FORMEN UND VULKANISIEREN EINER REIFENLAUFFLÄCHE
ÉLÉMENT MOULANT COMPORTANT DES MOYENS DE DÉCOUPE POUR LE MOULAGE ET LA VULCANISATION D'UNE BANDE DE ROULEMENT D'UN PNEUMATIQUE

(30) Priority: 17.12.2013 FR 1362796
(43) Date of publication of application: 26.10.2016
(73) Proprietor: Compagnie Générale des Etablissements Michelin, 63000 Clermont-Ferrand (FR)
(72) Inventor: KANEKO, Shuichi, Tokyo 163-1073 (JP)
(74) Representative: Regimbeau
(86) International application number: PCT/EP2014/072134
(87) International publication number: WO 2015/090671

(56) References cited:
- WO-A1-2013/087826
- US-A- 2 779 060
- US-A- 3 432 888
- US-A1- 2013 014 871

## Description

### FIELD OF THE INVENTION

The present invention relates to the field of moulds for moulding and vulcanizing a tyre tread. More specifically, the invention relates to the moulds used for moulding in the tread grooves which are partially or completely covered by an additional cover layer.

### PRIOR ART

WO2012087826 discloses a moulding element of a mould for moulding and vulcanizing a tyre tread. The moulding element comprises a moulding surface intended to mould part of the tyre tread surface and a rib intended to mould a groove in the tread. In addition, the moulding element comprises two lamellas positioned on either side of the rib at a certain distance from this rib, each lamella comprising a cutting edge, this cutting edge making an acute angle. The cutting edge is able to cut a cover layer that covers a green tyre. The rib itself will mould a groove in the tread and at the same time guide part of the cover layer into the groove thus moulded.

Document WO03089257 discloses a pneumatic tyre which has fine grooves formed in a tread surface for improve brake and drive performance on ice-bound roads in early periods of wear, and which prevents snow clogging in the fine grooves, thereby enabling a further enhancement of the effect of improving the brake and drive performance.

There is a need to improve the conception of the mould for moulding fine groove on the tread surface of the tire and in the same time incorporating a covering layer.

### DEFINITIONS

A "tyre" means all types of elastic tyre whether or not subjected to an internal pressure.

A "green tyre" or "green form" of a tyre means a superposition of a plurality of semi-finished rubber products present in the form of strips or sheets, with or without reinforcement. The green tyre is intended to be vulcanized in a mould in order to obtain the tyre.

The "tread" of a tyre means a quantity of rubber material bounded by lateral surfaces and by two main surfaces one of which is intended to come into contact with a road surface when the tyre is running.

A "tread surface" means the surface formed by those points on the tyre tread that come into contact with the road surface when the tyre is running.

A "mould" means a collection of separate moulding elements which, when brought closer towards one another, delimit a toroidal moulding space.

A "moulding element" of a mould means part of a mould. A moulding element is, for example, a mould segment.

A "rib" of a moulding element means a protrusion projecting from the moulding surface. A rib is intended to mould a groove in the tyre tread. The width of the groove is 2 mm or more.

A "lamella" of a moulding element means a protrusion projecting from the moulding surface. A lamella is intended to mould a sipe in the tyre tread The width of the lamella is less than 2 mm.

A "rib with a rounded end" means that the end of the rib is domed.

An "acute angle" means an angle smaller than 90°.

### SUMMARY OF THE INVENTION

The invention relates to a moulding element of a mould for moulding and vulcanizing a tyre tread as disclosed in claim 1. The moulding element comprises a rib intended to mould a groove in the tyre tread, this rib comprising a rounded end. Indeed, the moulding element comprises two cutting means positioned on either side of the rib at a certain distance from this rib, each cutting means comprises a cutting edge, this cutting edge making an acute angle. The moulding element comprises a plurality of lamellas positioned between the rib and the cutting means, the lamellas being shallower than the ribs. The rib having a direction of extension X and each lamella having a direction of extension Y, the direction of extension Y of the lamella makes an angle α with the direction of extension X of the rib, this angle α being less than 20°.

The cutting means are able to cut a cover layer that covers a green tyre. The rib itself will mould a groove in the tread and at the same time guide part of the cover layer into this groove thus moulded. In the same time, the lamellas mould a plurality of sipes on the tread surface of the tyre. Indeed, with the angle α we limit more unexpected trapping of the covering material.

In a variant, there is a minimum distance D between the rib and the nearest lamella, this distance is at least 1 mm. Thanks to this minimum distance, we limit unexpected trapping of the covering material by the lamella.

In a preferred embodiment, the angle α is less than or equal to 10°.

### BRIEF DESCRIPTION OF THE DRAWINGS

Other features and advantages of the invention will emerge from the following description, given by way of nonlimiting example, with reference to the attached drawings in which:
- **Figure 1** schematically depicts a moulding element according to the invention at a first step;
- **Figure 2** schematically depicts the moulding element of the **figure 1** at a second step;
- **Figure 3** illustrates the moulding element of figure 1 in another view..

In the description that follows, elements that are substantially identical or similar will be denoted by identical references.

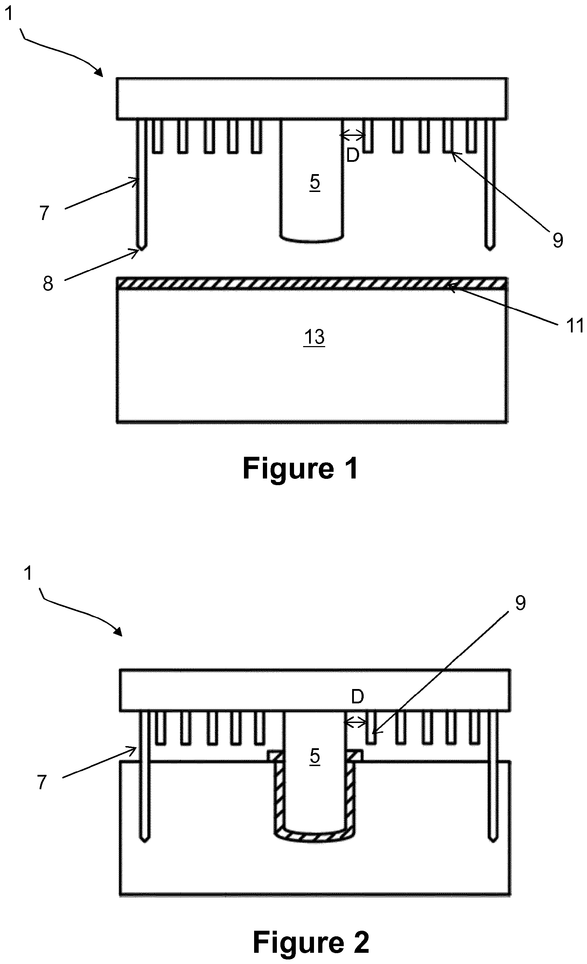

**Figure 1** depicts a moulding element 1 according to the invention at a first step. The moulding element 1 comprises a rib 5 and two cutting means 7 positioned on either side of the rib 5 at a certain distance from this rib. The cutting means 7 are able to cut a cover layer 11 that covers a green tyre 13. The rib 5 itself will mould a groove in the tread and at the same time guide part of the cover layer into this groove thus moulded.

More particularly, the rib 5 comprises a rounded end. The cutting means 7 comprises a cutting edge 8, the cutting edge making an acute angle. In a preferred embodiment, the acute angle is lower than or equal to 60°. In a variant, the acute angle is lower than or equal to 35°. In other variant, the acute angle is lower than or equal to 20°. Indeed, the moulding element 1 comprises a plurality of lamellas 9 positioned between the rib 5 and the cutting means 7, the lamellas being shallower than the rib. More particularly, the lamella have a height between 0,1 and 0,8 mm, a width between 0,1 and 0,8 mm and the pitch of the lamellas being between 0,5 and 3,0 mm.

**Figure 2** depicts the moulding element 1 of the invention at a second step. A this step, the moulding element 1 and the green tyre 9 move closer to one another. This movement is, for example, initiated by a membrane not depicted) in the mould. Under the action of a quantity of pressurized steam, this membrane swells and pushes the green tyre towards the moulding element 1. At the step of **Figure 2****,** the cutting means 7 have cut the cover layer 11. The rib 5 is moulding a groove in the tread and at the same time guide part of the cover layer into this groove. The invention proposes to maintain a minimum distance D between the rib 5 and the nearest lamella 9. Thanks to this minimum distance, we limit unexpected trapping of the covering material by the lamella. More particularly, the distance D is at least 1 mm.

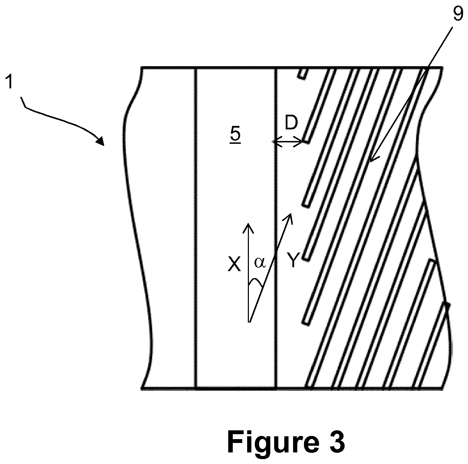

**Figure 3** illustrates the moulding element 1 of figure 1 in another view. In this view, the rib 5 has a direction of extension X and each lamella has a direction of extension Y. The direction of extension Y of the lamella makes an angle α with the direction of extension X of the rib, this angle α being less than 20°. In a preferred embodiment, the angle α is less than or equal to 10°.

The invention is not restricted to the examples described and depicted and various modifications can be made thereto without departing from its scope.

## Claims

1. Moulding element of a mould for moulding and vulcanizing a tyre tread, this moulding element (1) comprising a rib (5) intended to mould a groove in the tyre tread, this rib (5) comprising a rounded end, the moulding element comprising two cutting means (7) positioned on either side of the rib (5) at a certain distance from this rib, each cutting means (7) comprises a cutting edge (8), this cutting edge making an acute angle **characterized in that** the moulding element (1) comprises a plurality of lamellas (9) positioned between the rib (5) and the cutting means (7), the lamellas being shallower than the rib (5), the rib (5) having a direction of extension X and each lamella (9) having a direction of extension Y, the direction of extension Y of the lamella making an angle α with the direction of extension X of the rib, this angle α being less than 20°.

2. Moulding element according to Claim 1, **characterized in that** there is a minimum distance D between the rib (5) and the nearest lamella (9), this distance (D) is at least 1 mm.

3. Moulding element according to either of Claim 1 and Claim 2, **characterized in that** the angle α is less than or equal to 10°.

## Patentansprüche

1. Formteil einer Form zum Formen und Vulkanisieren einer Reifenlauffläche, wobei das Formteil (1) eine Rippe (5) aufweist, die zum Formen einer Rille in der Reifenlauffläche vorgesehen ist, wobei die Rippe (5) ein gerundetes Ende aufweist, das Formteil zwei auf je einer Seite der Rippe (5) auf einem bestimmten Abstand von der Rippe positionierte Schneidvorrichtungen (7) aufweist, jede Schneidvorrichtung (7) eine Schneidkante (8) aufweist, die Schneidkante eine spitzen Winkel bildet, **dadurch gekennzeichnet, dass** das Formteil (1) mehrere zwischen der Rippe (5) und den Schneidvorrichtungen (7) positionierte Lamellen (9) aufweist, wobei die Lamellen flacher sind als die Rippe (5), die Rippe (5) eine Ausdehnungsrichtung X und jede Lamelle (9) eine Ausdehnungsrichtung Y aufweist, wobei die Ausdehnungsrichtung Y der Lamelle mit der Ausdehnungsrichtung X der Rippe einen Winkel α bildet, dieser Winkel α kleiner als 20° ist.

2. Formteil nach Anspruch 1, **dadurch gekennzeichnet, dass** zwischen der Rippe (5) und der nächsten Lamelle (9) ein Mindestabstand D besteht und dieser Abstand (D) mindestens 1 mm beträgt.

3. Formteil nach einem der Ansprüche 1 oder 2, **dadurch gekennzeichnet, dass** der Winkel α kleiner als oder gleich groß wie 10° ist.

## Revendications

1. Elément de moulage d'un moule pour mouler et vulcaniser une bande de roulement, cet élément de moulage (1) comprenant une nervure (5) prévue pour mouler une rainure dans la bande de roulement, cette nervure (5) comprenant une extrémité arrondie, l'élément de moulage comprenant deux moyens de coupe (7) positionnés de chaque côté de la nervure (5) à une certaine distance de cette nervure, chaque moyen de coupe (7) comprenant une arête de coupe (8), cette arête de coupe réalisant un angle aigu, **caractérisé en ce que** l'élément de moulage (1) comprend une pluralité de lamelles (9) positionnées entre la nervure (5) et le moyen de coupe (7), les lamelles étant moins profondes que la nervure (5), la nervure (5) ayant une direction d'extension X et chaque lamelle (9) ayant une direction d'extension Y, la direction d'extension Y de la lamelle formant un angle α avec la direction d'extension X de la nervure, cet angle α étant inférieur à 20°.

2. Elément de moulage selon la revendication 1, **caractérisé en ce qu'**il existe une distance minimum D entre la nervure (5) et la lamelle la plus proche (9), cette distance (D) est au moins de 1 mm.

3. Elément de moulage selon l'une des revendications 1 ou 2, **caractérisé en ce que** l'angle α est inférieur ou égal à 10°.
